# EUROPEAN PATENT SPECIFICATION

(11) **EP 1 929 503 B1**
(45) Date of publication and mention of the grant of the patent: **10.11.2010**
(21) Application number: 06836140.1
(22) Date of filing: 25.09.2006
(51) Int. Cl.: H01J 1/62, H01J 63/04, H05B 33/20, C09K 11/70

(54) **UV-EMITTING PHOSPHORS, PHOSPHOR BLEND AND LAMP CONTAINING SAME**
UV-EMITTIERENDE LEUCHTSTOFFE, LEUCHTSTOFFMISCHUNG UND LAMPE DAMIT
PHOSPHORES EMETTEURS D'UV, MELANGE DE PHOSPHORES ET LAMPE RENFERMANT CEUX-CI

(30) Priority: 29.09.2005 US 596513 P
(43) Date of publication of application: 11.06.2008
(73) Proprietor: OSRAM-SYLVANIA INC., Danvers, MA 01923 (US)
(72) Inventor: DUTTA, Arunava, Winchester MA 01890 (US); DULLEA, Leonard V., Peabody MA 01960 (US); FAN, Chen Wen, Sayre PA 18940 (US); TETREAULT, Aline, Québec J0A 1B0 (CA); DESBIENS, Nicolas, St.-Germain-de-Grantham, Quebec J0C 1K0 (CA)
(74) Representative: Raiser, Franz
(86) International application number: PCT/US2006/037379
(87) International publication number: WO 2007/038467

(56) References cited:
- WO-A-2004/099341
- JP-A- 9 129 184
- US-A- 5 378 495
- US-A1- 2004 155 570
- US-B1- 6 952 081

## Description

### Cross References to Related Applications

This application claims the benefit of U.S. Provisional Application No. 60/596,513, filed 9/29/2005.

### Background of the Invention

Ultraviolet (UV)-emitting fluorescent tanning lamps are used for a variety of purposes, one of which is tanning of the human body. The phosphor coating on the interior surface of the lamp envelope absorbs the 254 and 185 nm photons produced by the low-pressure mercury plasma and emits in the UVA and UVB regions of the electromagnetic spectrum. The spectral power distribution (SPD) of the lamp is a quantification of the energy that is emitted at each wavelength and is dependent on the types of phosphors used in the lamp and their relative proportions.

Traditionally, the tanning industry has relied on one particular phosphor chemistry, lead-activated barium disilicate (BaSi₂O₅:Pb). This phosphor will either comprise 100% of the phosphor coating or will be present as the component with the highest weight percent (wt.%) in a multi-component phosphor blend. The BaSi₂O₅:Pb phosphor yields a lamp SPD that peaks at about 351 nm.

[0003a] Also in fluorescent lamps for photocatalytic action for use as bactericidal device, lead-activated barium disilicate (BaSi₂O₅:Pb) is used as phosphor component (JP 09 129184A).

However, there are drawbacks to the use of the BaSi₂O₅:Pb phosphor. One drawback is that like most silicate phosphors the maintenance of the UV output in fluorescent lamps is poor. In order to improve maintenance, a protective alumina coating is typically applied to the phosphor particles. A preferred method for applying the protective coating to the phosphor particles is via a CVD reaction in a fluidized bed (U.S. Patent Nos. 5,223,341 and 4,710,674). While effective, this CVD method requires relatively complex coating equipment and hazardous chemicals. Another drawback is the lead activator itself. There is increasing pressure on all manufacturers to eliminate lead from their products because of environmental concerns related to their disposal. Thus, a lead-free, non-silicate alternative to the BaSi₂O₅:Pb phosphor would offer a significant advantage to lamp manufacturers.

### Summary of the Invention

It is an object of the invention to obviate the disadvantages of the prior art.

It is another object of the invention to provide a lead-free phosphor blend for UV tanning lamps and a tanning lamp containing same.

In accordance with one object of the invention, there is provided a phosphor blend consisting of a mixture of a YPO₄:Ce phosphor and a LaPO₄:Ce phosphor. The preferred weight ratios of the YPO₄:Ce to LaPO₄:Ce phosphors are, in increasing order of preference, from 60:40 to 99:1, from 70:30 to 99:1, from 80:20 to 99:1, from 90:10 to 99:1 and even more preferably 96:4. (All phosphor blend ratios described herein are given as weight ratios unless otherwise indicated.)

In accordance with still another object of the invention, at least one of the YPO₄:Ce or LaPO₄:Ce phosphors has been treated to raise its isoelectric point by at least 0.5 pH units, and more preferably by at least one pH unit. More particularly, there is provided a LaPO₄:Ce phosphor having an isoelectric point at pH 4.3 or higher, and more preferably at pH 4.8 or higher. There is also provided a YPO₄:Ce phosphor having an isoelectric point at pH 5.3 or higher, and more preferably greater at pH 5.8 or higher.

In accordance with another aspect of the invention, there is provided a UV-emitting fluorescent lamp, comprising a sealed tubular envelope and at least one electrode for generating a discharge, the envelope containing an amount of mercury and having a phosphor coating on an interior surface, the phosphor coating consisting of a mixture of a YPO₄:Ce phosphor and a LaPO₄:Ce phosphor. In a preferred embodiment, the lamp has a UV-reflective layer disposed between the phosphor coating and the envelope, the UV-reflective layer extending partially around the circumference of the envelope and comprising alpha alumina having a surface area between 3 and 10 m²/g.

More preferably, the lamp exhibits an SPD having a first peak emission wavelength from 334-342 nm and a second peak emission wavelength from 352-360 nm. The intensity of the first peak emission wavelength is preferably between 60%-70% of the intensity of the second peak emission wavelength.

In one alternative, the normalized intensity in the lamp SPD for the wavelength region between 302-310 nm is preferably from 0.75% and 2.5%; the normalized intensity of lamp emission for the wavelength region between 311-320 nm is from 1% and 3.5%; the normalized intensity of lamp emission for the wavelength region between 321-325 nm is from 1.5% and 4%; and the normalized intensity of lamp emission for the wavelength region between 326-330 nm is from 4.5% and 20%.

In another preferred embodiment, the lamp has an erythemal response time, 0h Te, between 20 and 80 minutes, and preferably has a 100h UVA maintenance that is > 88% and a 100h UVB maintenance that is > 88%. Even more preferably, the 0h UVA output of the lamp is > 8500 µW/cm².

### Brief Description of the Drawings

Fig. 1 is an illustration of a longitudinal cross section of a reflector tanning lamp.

Fig. 2 is an illustration of a perpendicular cross section of a reflector tanning lamp.

Fig. 3 is a graph of the spectral power distribution of the ultraviolet radiation of three tanning lamps.

Fig. 4 is a plot of the initial erythemal time (0h Te) as a function of the percentage of LaPO₄:Ce phosphor in a YPO₄:Ce/LaPO₄:Ce phosphor blend.

Fig. 5 is a graph of the spectral power distribution of a 96:4 YPO₄:Ce/LaPO₄:Ce phosphor blend.

Fig. 6 is a graph illustrating the change in the isoelectric points of YPO₄:Ce and LaPO₄:Ce phosphors after washing with a KOH solution.

Fig. 7 is a plot showing the improvement in stabilization time of lamps made with treated YPO₄:Ce and LaPO₄:Ce phosphors.

Fig. 8 is a graph of the lamp stabilization time curves for various phosphor blends.

Fig. 9 is a further graph of the lamp stabilization time curves for various phosphor blends.

Fig. 10 is a graph of the spectral power distribution of various phosphor blends compared to a state-of-the-art control lamp.

### Detailed Description of the Invention

For a better understanding of the present invention, together with other and further objects, advantages and capabilities thereof, reference is made to the following disclosure and appended claims taken in conjunction with the above-described drawings.

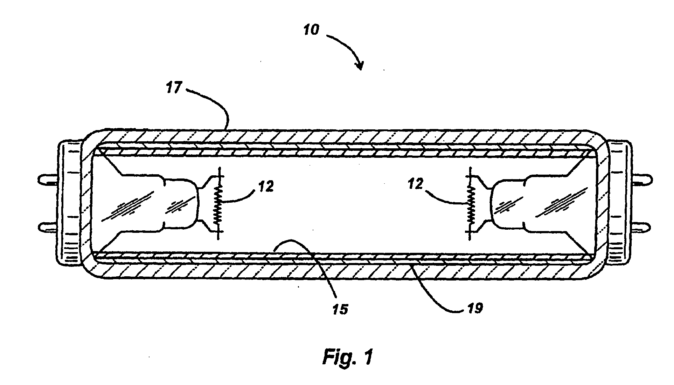

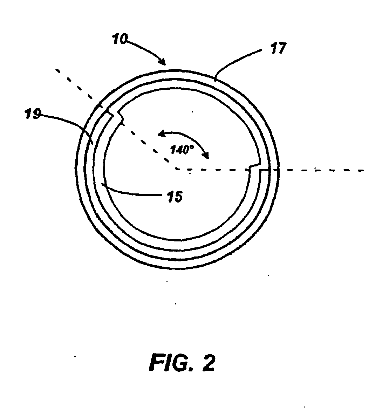

In a reflector tanning lamp, there is a coating of a UV reflective material next to the glass which usually covers only a portion of the bulb circumference. A layer of phosphor is then applied on top of the reflective material. An illustration of a reflector tanning lamp is shown in Figs. 1 and 2. Fig. 1 illustrates a longitudinal cross section through the tubular lamp along its central axis. Fig. 2 illustrates a cross section perpendicular to the central axis of the lamp. The lamp 10 has a hermetically sealed UV transmissive, glass envelope 17. The interior of the envelope 17 is filled with an inert gas such as argon, neon, krypton or a mixture thereof, and a small quantity of mercury, at least enough to provide a low vapor pressure during operation. An electrical discharge is generated between electrodes 12 to excite the mercury vapor to generate ultraviolet radiation. A coating of a UV reflective material 19, e.g., aluminum oxide (alumina), is coated on the interior surface of the envelope 17 and a phosphor coating 15 is applied over the reflective layer 19. While the phosphor layer 15 covers the entire bulb circumference, a typical coverage angle for the reflector layer varies from 180° to 240° of the circumference. A reflector layer that covers 220° of the circumference is shown in Fig 2. The primary role of the reflector material is to reflect the UVA and UVB radiation emitted by the phosphor layer back towards the front of the lamp from where it escapes through the region of the bulb that does not have any UV reflective material on the glass.

### Example 1

Reflector lamps were made with two phosphor coatings: (1) 100% YPO₄:Ce (OSRAM SYLVANIA type 2040) and (2) a blend of 96 wt.% YPO₄:Ce and 4 wt.% (Mg,Sr)Al₁₁O₁₉:Ce (OSRAM SYLVANIA type 2096). Two reflector coatings were also evaluated: (1) 100% HPA and (2) a mixture of 75:25 by weight HPA/CR30. HPA is an alpha alumina powder made by Baikowski and has a surface area of about 5 m²/g. CR30 is a another commercially available alumina from Baikowski and has a surface area of about 30 m²/g.

The coated lamps were finished ( i.e. made into working lamps) together with state-of-the-art tanning lamps as a control (*See*, *e.g.,* U.S. Patent No. 6,984,931) using the same fill gas composition and fill pressure.

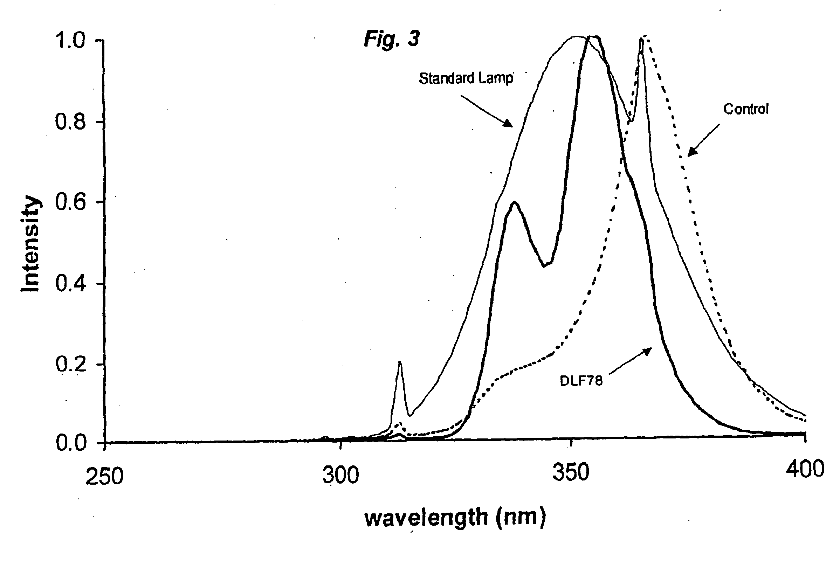

The SPD of the 96:4 2040/2096 test group, curve marked DLF78, with 75:25 HPA/CR30 reflector alumina is shown in Fig. 3. By comparing normalized lamp SPDs, it can be seen that the test group has a very different SPD than both the standard lamp using 100% BaSi₂O₅:Pb phosphor or the state-of-the-art control lamp. The peak wavelength occurs at about 356 nm for the 96:4 2040/2096 blend, at 351 nm for the 100% BaSi₂O₅:Pb lamp and at about 366 nm for the state-of-the-art control.

The results of measurements on the test lamps are given in Table 1. In particular, the lamps were measured for initial UVA output (0h UVA), initial erythemal time (0h Te) and 100h UV maintenance. The 100h UV maintenance refers to the UV output at 100h expressed as a percentage of the 0h UV. The 0h UVA output of the state-of-the-art control lamps was measured to be about 9100 µW/cm².

**Table 1**

| Phosphor | Powder Wt, (g) | Reflector Alumina Type | 0h UVA, µW/cm² | 0h Te, min | 100h UVA Maint, % | 100h UVB Maint, % |
|---|---|---|---|---|---|---|
| 96:4 2040/2096 | 8.8 | 75:25 HPA/CR30 | 8321 | 35.8 | 92.9 | 89.7 |
| 100% 2040 | 9.1 | 75:25 HPA/CR30 | 8490 | 56.3 | 91.3 | 88.7 |
| 100% 2040 | 8.4 | 100% HPA | 8405 | 54.1 | 91 | 88.4 |

In Table 1, it can be seen that the 0h UVA output of all three lamp test groups is lower than that of the state-of-the-art control lamp control group by about 6.5%-8.5%. In addition, the 0h Te of the two 100% type 2040 lamp groups is too high compared to the desired 0h Te range of 28-38 minutes. The reason for the much higher 0h Te for these two test groups is because of the low UVB emission from the type 2040 phosphor. The erythemal time Te depends on the magnitude and shape of the UVB portion of the lamp SPD. A lower 0h UVB yields a higher 0h Te.

Type 2096 phosphor peaks in the UVB portion of the electromagnetic spectrum. When 4 wt.% of type 2096 is added to type 2040 (Table 1, 96:4 ratio), the lamp UVB output increases which lowers the 0h Te to an acceptable level. The somewhat lower 0h UVA of the 96:4 2040/2096 group relative to the 100% type 2040 group with the same reflector is due to the dilution of the type 2040 phosphor.

The UVA and UVB maintenance of all three test cases is equivalent to the state-of-the-art control lamps. The 100h UVA maintenance of the test groups was greater than 90% and 100h UVB maintenance of the test groups was greater than 88%. Moreover, both of these values exceed the UV maintenance values typically observed for 100% BaSi₂O₅:Pb-based reflector tanning lamps, about 85% for UVA and 80% for UVB.

Although the 96:4 2040/2096 group with the 75:25 HPA/CR30 reflector alumina produced an acceptable lamp, an increase in the 0h UVA was sought.

### Example 2

Reflector lamps were coated with a new phosphor blend as shown in Table 2. In this case, the blend used was 96:4 by weight of YPO₄:Ce/LaPO₄:Ce. The LaPO₄:Ce phosphor (OSRAM SYLVANIA Type 2080) has a different intrinsic emission spectrum compared to type 2096 phosphor that was used in Example 1.

The UV reflector material was also different than Example 1. In these lamps, the reflector layer was 100% CR6 alumina which is an alpha alumina manufactured by Baikowski with surface area of about 6 m²/g. It was found that the CR6 alumina had a higher reflectance in the UVA and UVB region of the electromagnetic spectrum compared to the HPA alumina. In particular, glass slides were coated with both HPA alumina and CR6 alumina at various levels of powder loading and measured for UV reflectance. The CR6 alumina was found to exceed HPA alumina in UV reflectance at all wavelengths between 300 to 400 nm which is the region of interest for UV emitting tanning lamps. Based on this, it was expected that the use of CR6 alumina as a reflector would provide an additional increase in the 0h UVA output since it would reflect more of the UV to the window region of the lamp. Preferred CR6 alumina coating weights range from about 7 to about 12 mg/cm².

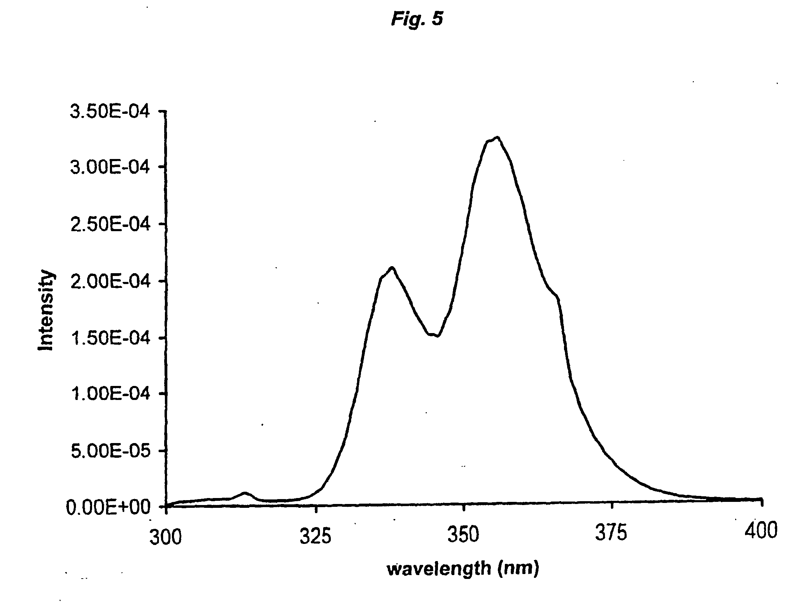

A normalized lamp SPD for these lamps is shown in Fig. 5. Table 2 provides the results of the lamp measurements.

**Table 2 - TESTING IN FR70.2/T12/VHR LAMP CONFIGURATION**

| Phosphor Blend | Phosphor Wt, (g) | Reflector Alumina Type | Reflector Wt, (g) | 0h UVA, µW/cm² | 0h Te, min | 100h UVA Maint, % | 100h UVB Maint, % |
|---|---|---|---|---|---|---|---|
| 96:4 YPO₄:Ce/ LaPO₄:Ce | 9.3 | 100% CR6 | 12.7 | 8602 | 29.3 | 89.4 | 91 |

As can be seen from Table 2, the combination of the CR6 reflector alumina and the 96:4 YPO₄:Ce/LaPO₄:Ce phosphor blend resulted in a significant increase in lamp 0h UVA output compared to the 96:4 blend of Example 1. The 0h UVA output of the test group in Table 2 is only about 1.5% lower than the state-of-the-art control group for Table 2. In Example 1, the 0h UVA output of the 96:4 blend was at least about 8.5% lower than that of the state-of-the-art control.

There is also an increase in the 0h UVB output from this lamp which can be seen in the lower 0h Te as compared to Example 1. The 0h Te in Example 2 is 29.3 minutes as compared to 35.8 minutes in Example 1. The lower Te is preferred since it indicates faster tanning characteristics.

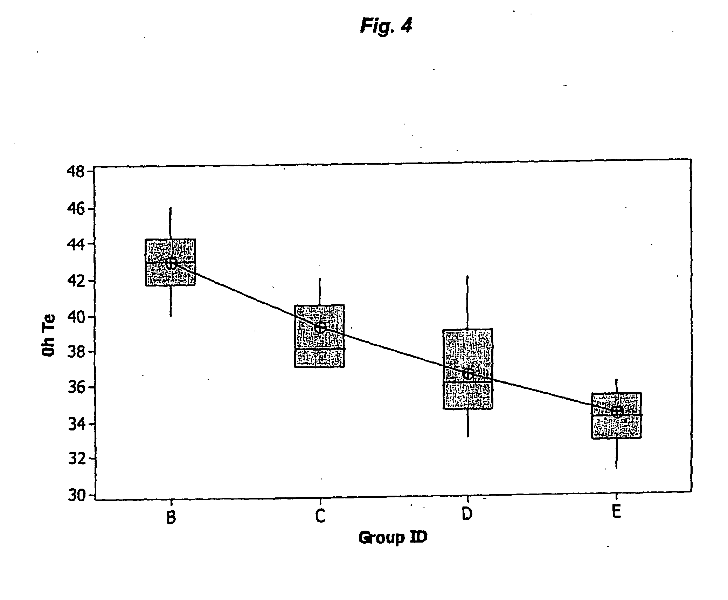

As the percentage of the LaPO₄:Ce in the YPO₄:Ce/LaPO₄:Ce phosphor blend is increased, the UVB emission from the blend will increase and the 0h Te will decrease as can be seen in Fig. 4. Here, the percentage of LaPO₄:Ce is increased from 2 wt.% to 8 wt.% as one progresses from Group B to E.

In order to allow for the manufacturing of tanning lamps with a greater flexibility in 0h Te, the percentage of LaPO₄:Ce in the two component blend may vary between 1 to 40wt.%, with the balance being the YPO₄:Ce phosphor. This allows the 0h Te to vary between 2-80 minutes.

The 100 h UVA and UVB maintenance of the lamp in Example 2 is also very good and comparable to the state-of-the-art control group.

It is important to note that no protective coatings are required for the phosphate phosphors involved in this invention and yet both the UVA and UVB maintenance are excellent. Furthermore, the phosphate phosphors are more robust than the aforementioned silicate phosphors when used in water-based coating suspensions. This prolongs the life time of the coating suspensions which benefits the production process economics. Moreover, the phosphor blend of this invention does not use any lead-containing phosphors thereby providing potential environmental benefits.

Table 3 provides the results of an ionic analysis of the aqueous medium after a 96:4 YPO₄:Ce/LaPO₄:Ce phosphor blend was used to make a water-based coating suspension. The suspension was held over for 35 days. The levels of Y and La are very low, less than 10 ppm. Typical cation levels for a 30 day holdover of a water-based suspension containing a BaSi₂O₅:Pb phosphor are significantly higher, about 1500-2000 ppm for similar hold-over conditions.

**Table 3**

| suspension | phosphate (mg/L) | aluminum (mg/L) | cerium (mg/L) | lanthanum (mg/L) | yttrium (mg/L) |
|---|---|---|---|---|---|
| 1 day | 0.4 | 7.5 | 0.6 | 0.4 | 0.5 |
| 35 day | 0.6 | 436 | < 0.1 | < 0.1 | 5.5 |

Although the YPO₄:Ce/LaPO₄:Ce makes acceptable tanning lamps, one problem with the use of these phosphors is that the lamps take a significantly long time to stabilize after they were switched on compared to the traditional BaSi₂O₅:Pb-based lamps. The difference is often a factor of two.

The time for the lamp to stabilize electrically correlated directly with the time required for the lamp to develop full axial brightness when run in the vertical position. During testing, it was observed that the YPO₄:Ce/LaPO₄:Ce lamps required a much longer time to develop full axial brightness compared to the BaSi₂O₅:Pb-based lamps. In particular, the bottom of the lamp reached full brightness first and then progressively the upper regions of the lamp attained full brightness.

Upon further investigation, measurements of surface chemistry of these phosphors determined that the surface of both the YPO₄:Ce and the LaPO₄:Ce phosphors are acidic. The isoelectric point (IEP) measured for LaPO₄:Ce phosphor is about pH 3.8 while the IEP for the YPO₄:Ce phosphor is about pH 4.8. It is hypothesized that this acidic surface causes the phosphor surface to charge negatively in the low pressure plasma in the fluorescent lamp. This is believed to cause the phosphor surface to attract Hg²⁺ ions from the discharge leading to slower Hg diffusion rates and, consequently, a slower stabilization and longer time to reach full brightness.

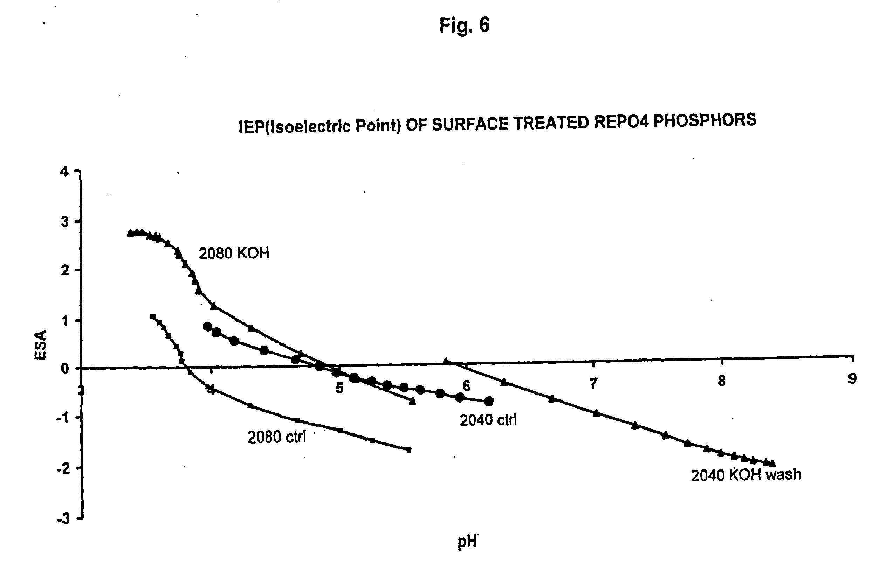

In order to decrease the lamp stabilization time, these phosphors were treated to increase their IEP, i.e., make the particle surface more basic. A preferred way of doing this is to wash the phosphors with a basic solution, preferably a potassium hydroxide, KOH, wash. Others ways may include depositing a more basic coating, e.g., alumina or yttria, by any one of a variety of methods. Fig. 6 demonstrates that a KOH wash increases the IEP of the YPO₄:Ce (type 2040) and LaPO₄:Ce (type 2080) phosphors by about 1 pH unit.

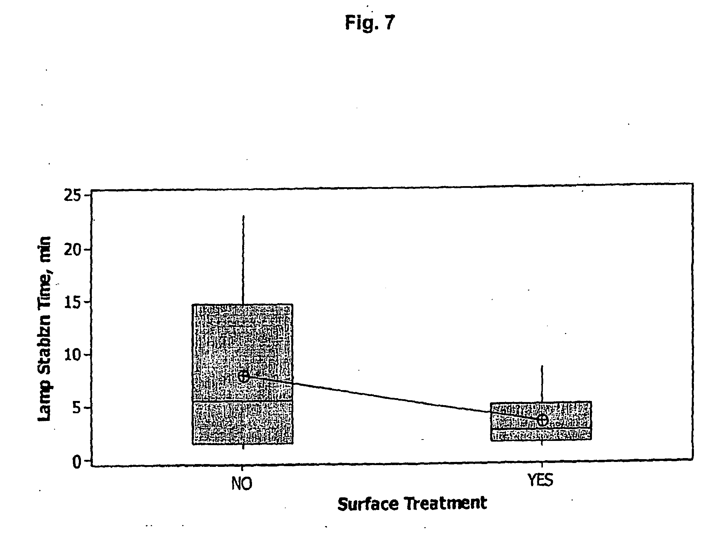

The KOH-treated YPO₄:Ce and LaPO₄:Ce phosphors were tested and compared with the untreated phosphors in a lamps. The results for the test groups are presented in Fig. 7. The crossed circle in the boxes represents the mean value of the test group and the horizontal line indicates the median value. The upper and lower boundaries of the boxes represent the 75th and 25th quartiles, respectively. The results clearly show a remarkable improvement in stabilization time when surface-treated phosphors are used compared to the untreated phosphors. A similar improvement was also noticed in the time for development of full axial brightness when surface-treated phosphors were used.

In addition to, or in place of the surface treatment, it is possible to improve stabilization time by the addition of a third component to the phosphor blend that has a much higher IEP than either of the two phosphate phosphors, in particular the IEP of the third phosphor should be at least about 3 pH units higher than the untreated phosphate phosphors. A preferred phosphor for this purpose is SrB₄O₇:Eu (e.g., OSRAM SYLVANIA Type 2052). The SrB₄O₇:Eu phosphor has an IEP at about pH 9 and may be added to the blend in an amount from 5wt.% to 40wt.% of the blend. In a blend, the three components may range from 5wt.% to 40wt.% SrB₄O₇:Eu, 30wt.% to 80wt.% YPO₄:Ce, and 5wt.% to 35wt.% LaPO₄:Ce with the sum of wt.% of the three components in the blend adding to 100%. The three components in the blend may range from 10wt.% to 25wt.% SrB₄O₇:Eu, 50wt.% to 70wt.% YPO₄:Ce and 10wt.% to 30wt.% LaPO₄:Ce with the sum of wt.% of the three components in the blend adding to 100%. The three components in the blend may range from 15wt.% to 20wt.% SrB₄O₇:Eu, 60wt.% to 70wt.% YPO₄:Ce and 15wt.% to 25wt.% LaPO₄:Ce with the sum of wt.% of the three components in the blend adding to 100%.

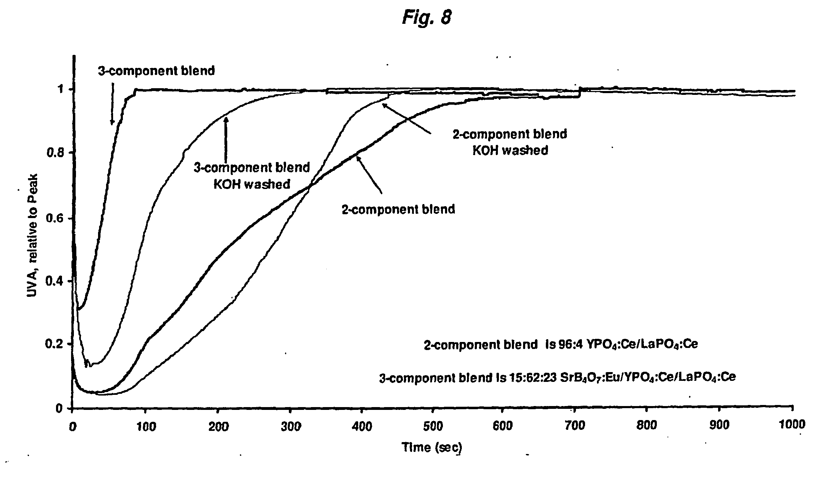

The decreased stabilization time for lamps made with the above described phosphor blends is illustrated in Fig. 8 which is a graph of the normalized UVA output as a function of initial lamp operating time. The normalization is done with respect to the peak UVA output. All of the blends containing the KOH-treated phosphate phosphors, YPO₄:Ce and LaPO₄:Ce, performed better than the untreated 2-component blend (96:4 YPO₄:Ce/LaPO₄:Ce). The untreated 3-component blend (15:62:23 SrB₄O₇:Eu/YPO₄:Ce/LaPO₄:Ce) showed the greatest improvement, shortest time to full UVA output, as compared to the untreated 2-component blend. Surprisingly, the 3-component blend containing the untreated phosphors performed better than the 3-component blend containing the treated phosphors. The reason for this is unclear but indicates that the effect of the high IEP value of the SrB₄O₇:Eu phosphor may negate to a degree the benefit derived from the surface treatment of the phosphate phosphors. Still, the 3-component blend with the treated phosphors performed better than either of the 2-component blends (treated and untreated).

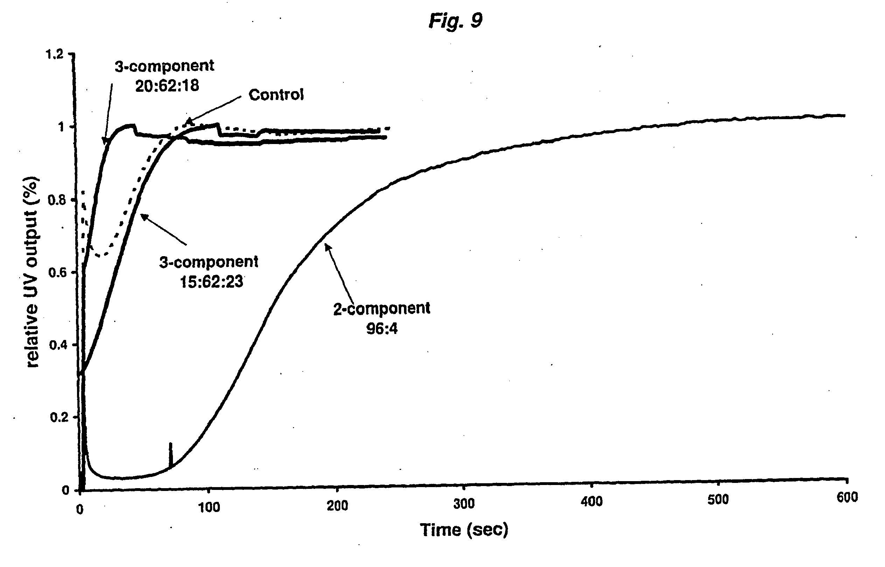

In Fig. 9, the stabilization curves are shown for lamps containing blends with only untreated phosphate phosphors, i.e., no KOH wash. Two untreated 3-component blends of SrB₄O₇:Eu/YPO₄:Ce/LaPO₄:Ce phosphors with blend compositions of 15:62:23 and 20:62:18 are shown together with an untreated 2-component blend of YPO₄:Ce/LaPO₄:Ce phosphors with blend composition of 96:4. A state-of-the-art control lamp, of the type mentioned previously, is also included for reference. It is seen that the lamps containing the 3-component untreated blends have very good stabilization times, similar to the state-of-the-art control lamp, and stabilize much faster than the lamp containing the 2-component untreated blend.

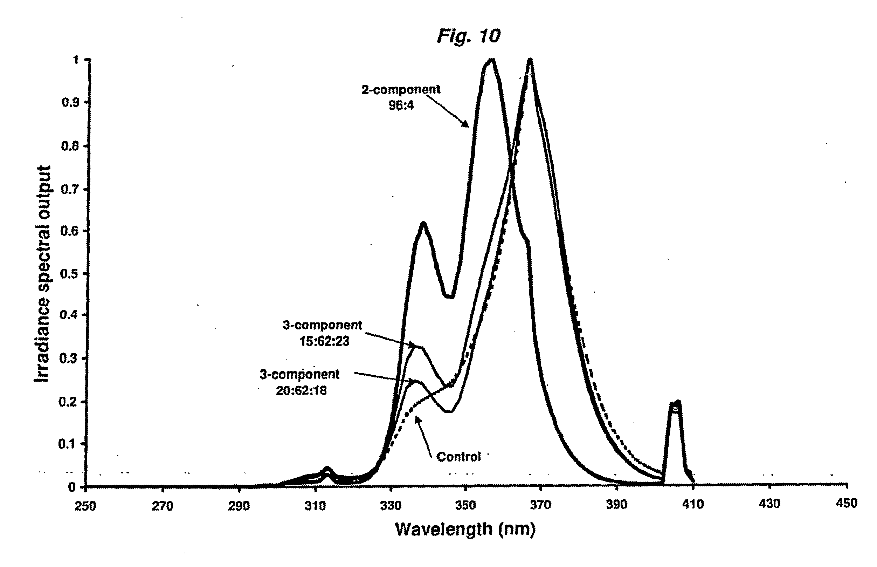

The 0h UVA output of the 3-component blend lamp is also superior to that of the 2-component blend lamp by about 1.8-3.5%. Typical SPDs of the 3-component blends versus the 2-component blend and the-state-of-the-art control are shown in Fig. 10. It is seen that the 3-component blends exhibit a different SPD compared to the two-component blend which in turn is different from the SPD of the state-of-the-art control.

While there have been shown and described what are present considered to be the preferred embodiments of the invention, it will be apparent to those skilled in the art that various changes and modifications can be made herein without departing from the scope of the invention as defined by the appended claims. In particular, the phosphor blend of this invention may be equally well applied to full-coat tanning lamps that do not have a UV reflective layer next to the glass.

## Claims

1. A phosphor blend, consisting of a mixture of a YPO₄:Ce phosphor and a LaPO₄:Ce phosphor wherein the weight ratio of YPO₄:Ce to LaPO₄:Ce phosphors is from 60:40 to 99:1.

2. The phosphor blend of claim 1 wherein the weight ratio of YPO₄:Ce to LaPO₄:Ce phosphors is from 70:30 to 99:1.

3. The phosphor blend of claim 1 wherein the weight ratio of YPO₄:Ce to LaPO₄:Ce phosphors is from 80:20 to 99:1.

4. The phosphor blend of claim 1 wherein the weight ratio of YPO₄:Ce to LaPO₄:Ce phosphors is from 90:10 to 99:1.

5. The phosphor blend of claim 1 wherein the weight ratio of YPO₄:Ce to LaPO₄:Ce phosphors is 96:4.

6. The phosphor blend of claim 1 wherein the LaPO₄:Ce has an isoelectric point at pH 4.3 or higher.

7. The phosphor blend of claim 6 wherein the isoelectric point is at pH 4.8 or higher.

8. The phosphor blend of claim 1 wherein the YPO₄:Ce has an isoelectric point at pH 5.3 or higher.

9. The phosphor blend of claim 8 wherein the isoelectric point is at pH 5.8 or higher.

10. A UV-emitting fluorescent lamp, comprising a sealed tubular envelope and at least one electrode for generating a discharge, the envelope containing an amount of mercury and having a phosphor coating on an interior surface, the phosphor coating consisting of a phosphor blend according to one of the claims 1 - 9.

11. The lamp of claim 10 wherein the lamp has a UV-reflective layer disposed between the phosphor coating and the envelope, the UV-reflective layer extending partially around the circumference of the envelope and comprising alpha alumina having a surface area between 3 and 10 m²/g.

## Patentansprüche

1. Leuchtstoffmischung, die aus einem Gemisch aus einem YPO₄:Ce-Leuchtstoff und einem LaPO₄:Ce-Leuchtstoff besteht, wobei das Gewichtsverhältnis von YPO₄:Ce- zu LaPO₄:Ce-Leuchtstoffen zwischen 60:40 und 99:1 liegt.

2. Leuchtstoffmischung nach Anspruch 1, wobei das Gewichtsverhältnis YPO₄:Ce- zu LaPO₄:Ce-Leuchtstoffen zwischen 70:30 und 99:1 liegt.

3. Leuchtstoffmischung nach Anspruch 1, wobei das Gewichtsverhältnis YPO₄:Ce- zu LaPO₄:Ce-Leuchtstoffen zwischen 80:20 und 99:1 liegt.

4. Leuchtstoffmischung nach Anspruch 1, wobei das Gewichtsverhältnis YPO₄:Ce- zu LaPO₄:Ce-Leuchtstoffen zwischen 90:10 und 99:1 liegt.

5. Leuchtstoffmischung nach Anspruch 1, wobei das Gewichtsverhältnis YPO₄:Ce- zu LaPO₄:Ce-Leuchtstoffen 96:4 beträgt.

6. Leuchtstoffmischung nach Anspruch 1, wobei das LaPO₄:Ce einen isoelektrischen Punkt bei einem pH-Wert von 4,3 oder höher aufweist.

7. Leuchtstoffmischung nach Anspruch 6, wobei der isoelektrische Punkt bei einem pH-Wert von 4,8 oder höher liegt.

8. Leuchtstoffmischung nach Anspruch 1, wobei das YPO₄:Ce einen isoelektrischen Punkt bei einem pH-Wert von 5,3 oder höher aufweist.

9. Leuchtstoffmischung nach Anspruch 8, wobei der isoelektrische Punkt bei einem pH-Wert von 5,8 oder höher liegt.

10. UV-emittierende Leuchtstofflampe, umfassend einen abgedichteten röhrenförmigen Kolben und mindestens eine Elektrode zum Erzeugen einer Entladung, wobei der Kolben eine Menge an Quecksilber enthält und eine Leuchtstoffbeschichtung auf einer Innenoberfläche aufweist, wobei die Leuchtstoffbeschichtung aus einer Leuchtstoffmischung nach einem der Ansprüche 1-9 besteht.

11. Lampe nach Anspruch 10, wobei die Lampe eine UVreflektierende Schicht aufweist, die zwischen der Leuchtstoffbeschichtung und dem Kolben angeordnet ist, wobei die UVreflektierende Schicht sich teilweise um den Umfang des Kolbens herum erstreckt und alpha-Aluminiumoxid mit einer Oberfläche zwischen 3 und 10 m²/g umfasst.

## Revendications

1. Mélange luminescent consistant en un mélange d'une substance luminescente YP04:Ce et d'une substance luminescente LaP04:Ce dans lequel le rapport en poids des substances luminescentes YP04:Ce à LaP04:Ce va de 60:40 à 99:1.

2. Mélange luminescent suivant la revendication 1, dans lequel le rapport en poids des substances luminescentes YP04:Ce à LaP04:Ce va de 70:30 à 99:1.

3. Mélange luminescent suivant la revendication 1, dans lequel le rapport en poids des substances luminescentes YP04:Ce à LaP04:Ce va de 80:20 à 99:1.

4. Mélange luminescent suivant la revendication 1, dans lequel le rapport en poids des substances luminescentes YP04:Ce à LaP04:Ce va de 90:10 à 99:1.

5. Mélange luminescent suivant la revendication 1, dans lequel le rapport en poids des substances luminescentes YP04:Ce à LaP04:Ce est de 96:4.

6. Mélange luminescent suivant la revendication 1, dans lequel le LaP04:Ce a un point isoélectrique à un pH supérieur ou égal à 4, 3.

7. Mélange luminescent suivant la revendication 6, dans lequel le point isoélectrique est à un pH supérieur ou égal à 4,8.

8. Mélange luminescent suivant la revendication 1, dans lequel le YP04:Ce a un point isoélectrique à un pH supérieur ou égal à 5,3.

9. Mélange luminescent suivant la revendication 8, dans lequel le point isoélectrique est à un pH supérieur ou égal à 5,8.

10. Lampe fluorescente émettant des ultraviolets et comprenant une ampoule tubulaire scellée et au moins une électrode pour produire une décharge, l'ampoule contenant une quantité de mercure et ayant un revêtement de substance luminescente sur une surface intérieure, le revêtement de substance luminescente consistant en un mélange luminescent suivant l'une quelconque des revendications 1 à 9.

11. Lampe suivant la revendication 10, dans laquelle la lampe a une couche réfléchissant les ultraviolets disposée entre le revêtement de substance luminescente et l'ampoule, la couche réfléchissant les ultraviolets s'étendant en partie autour de la circonférence de l'ampoule et comprenant de l'alumine alpha ayant une surface spécifique comprise entre 3 et 10 m²/g.
